# FASCICULE DE BREVET EUROPEEN

(11) **EP 3 542 626 B1**
(45) Date de publication et mention de la délivrance du brevet: **14.10.2020**
(21) Numéro de dépôt: 19162926.0
(22) Date de dépôt: 14.03.2019
(51) Int. Cl.: A01M 7/00

(54) **STRUCTURE DE RAMPE DE PULVÉRISATION OU D'ÉPANDAGE ET PULVÉRISATEUR OU ÉPANDEUR AVEC UNE TELLE RAMPE**
STRUKTUR EINER SPRÜH- ODER STREURAMPE UND FELDSPRITZE ODER STREUER MIT EINER SOLCHEN RAMPE
SPRAYING OR SPREADING BOOM STRUCTURE AND SPRAYER OR SPREADER WITH SUCH A BOOM

(30) Priorité: 19.03.2018 FR 1852317
(43) Date de publication de la demande: 25.09.2019
(73) Titulaire: Kuhn-Audureau SAS, 85260 La Copechagnière (FR)
(72) Inventeur: GAUTRON, Pascal, 85250 SAINT-FULGENT (FR); LE GUYADER, Dimitri, 56620 CLEGUER (FR)
(74) Mandataire: Cabinet Nuss

(56) Documents cités:
- EP-A1- 1 302 107
- EP-A1- 2 567 616
- EP-A1- 3 111 760
- GB-A- 240 309

## Description

La présente invention concerne le domaine des constructions tubulaires légères et allongées, autorisant un important porte-à-faux et une extension autoportante de grande dimension, en particulier dans le domaine des équipements et du machinisme agricoles.

Plus précisément, l'invention porte sur une structure de rampe de pulvérisation ou d'épandage, ainsi que sur un pulvérisateur ou épandeur tracté, porté ou automoteur comportant une telle rampe.

Les pulvérisateurs sont utilisés pour épandre ou pulvériser sur des cultures des produits chimiques sous forme de poudre ou de gouttes.

Un tel pulvérisateur comporte une rampe et un(e) cuve ou réservoir permettant de contenir le produit à pulvériser. La rampe s'étend de part et d'autre du véhicule (pulvérisateur tracté ou porté) pour distribuer le produit contenu dans la cuve.

La rampe de pulvérisation, et notamment sa structure, a pour fonction principale de soutenir les buses et l'ensemble des tuyaux dans lesquels circulent les produits de pulvérisation.

La rampe doit être suffisamment rigide pour ne pas fléchir en cours de traitement (écart de distance entre buses et plantes constant), doit être aussi légère que possible et doit aussi pouvoir se replier pour respecter les normes de circulation sur routes. Les matériaux constituant sa structure doivent assurer solidité et résistance à la corrosion.

Aujourd'hui encore, les structures de rampes sont souvent construites à l'aide de tubes en acier assemblés par mécano soudure et une structure en treillis permet d'augmenter la rigidité sans pénaliser le poids.

Les liaisons entre les différents tubes sont très sollicitées notamment par fatigue et par le moment fléchissant dû à la gravité, ce qui entraîne la formation de fissures et éventuellement la rupture de la structure. Pour limiter ce risque de rupture des soudures, il est connu de renforcer localement ces zones d'assemblage et de fixation, mais cela rajoute un poids non négligeable à la rampe. De telles opérations de maintenance et de réparation nécessitent du sciage et du soudage, ce qui est coûteux en temps.

De plus, la largeur de travail des pulvérisateurs évolue et les structures de rampes sont de plus en plus larges (extensions latérales augmentées), et il est de plus en plus fréquent d'utiliser des matériaux permettant d'alléger les rampes tels que l'aluminium ou des matériaux composites. La faible densité de l'aluminium permet d'utiliser des profilés de grandes dimensions pour réaliser des rampes rigides.

Ces structures de rampes en aluminium sont souvent réalisées à partir d'éléments soudés et donc ces rampes présentent également des faiblesses au niveau des soudures. Un inconvénient supplémentaire avec des rampes en aluminium ou ses alliages réside dans le fait qu'il n'est pas possible d'effectuer les réparations dans les locaux de l'utilisateur (exploitation agricole, ferme), puisqu'un équipement spécial de soudure, relativement coûteux, est nécessaire. De manière alternative, le tronçon de rampe est à remplacer dans son intégralité.

On connaît, par ailleurs, des pulvérisateurs avec des rampes constituées de tronçons de rampe en aluminium dont l'assemblage est réalisé par bridage collage sans aucune soudure. Ce tronçon de rampe dispose d'une section transversale en forme de triangle avec une partie supérieure étroite, une partie inférieure large et des tirants qui forment les côtés du triangle. Les tirants sont bridés collés sur la partie inférieure et sur la partie supérieure. La partie inférieure large dispose d'une largeur constante. Un inconvénient majeur de cette rampe est qu'il n'est pas possible de démonter les tirants en cas de casse et surtout que le poids linéaire est important, même en partie extrémale.

Par les documents EP 1 302 107 et EP 2 567 616, on connaît en outre des structures de rampes à section transversale trapézoïdale ou rectangulaire, comportant des éléments profilés en partie supérieure et en partie inférieure reliés entre eux par des tirants. Ces tirants sont fixés aux profilés par des moyens de solidarisation et de couplage formés de deux parties complémentaires, emprisonnant entre elles un bord d'accrochage d'un des profilés et les extrémités de deux tirants. Les tirants sont ainsi reliés auxdits profilés par des liaisons pivots.

Toutefois, les rampes divulguées par ces deux documents présentent une section quadrilatérale, de grande surface et, pour le document EP 2 567 616 au moins, identique sur toute leur longueur (d'où un moment fléchissant d'intensité élevé). En outre, les moyens de solidarisation double mis en œuvre font état d'une structure complexe et les pièces profilées supérieure et inférieure sont des pièces spécifiques, non standards et d'un prix de revient élevé. De plus, l'accrochage des moyens de solidarisation sur les pièces profilées longitudinales s'effectue par pincement et avec des régions périphériques seulement de ces pièces. Enfin, deux moyens de solidarisation doivent être entièrement démontés pour le remplacement d'un unique tirant.

La demande de brevet FR 3 064 156 au nom de la demanderesse, a pour objet une structure de rampe permettant de surmonter au moins les principaux inconvénients précités.

Malgré ses nombreux avantages, cette dernière structure de rampe présente néanmoins encore un grand nombre d'éléments à assembler, ne permet pas une maîtrise optimale du jeu d'assemblage et de fonctionnement et pourrait faire état d'une résistance à la flexion plus importante au niveau des éléments tubulaires longitudinaux de la rampe.

La présente invention a pour but de surmonter au moins certaines des limitations précitées.

A cet effet, elle a pour objet une structure de rampe de pulvérisation ou d'épandage comprenant deux mâts latéraux formés chacun d'au moins un tronçon, ces deux mâts latéraux étant avantageusement disposés de part et d'autre d'un segment central,
le tronçon unique, chaque tronçon ou au moins un des tronçons de chaque mât latéral étant constitué d'un assemblage d'éléments allongés comprenant, d'une part, un tube longitudinal sommital, d'autre part, au moins un tube longitudinal inférieur et, enfin, des éléments d'entretoisement, formant tirants et étrésillons, s'étendant entre le tube sommital et ledit au moins un tube inférieur, en les reliant,
structure de rampe caractérisée en ce que chaque tube longitudinal présente au moins une excroissance radiale, profilée dans la direction longitudinale du tube considéré, et comportant au moins une ouverture, préférentiellement plusieurs ouvertures espacées le long dudit tube, constituant un site de solidarisation pour une extrémité d'au moins un élément d'entretoisement.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue de dessus d'un pulvérisateur équipé d'une structure de rampe selon un mode de réalisation de l'invention ;
la figure 2 est une vue partielle en élévation frontale d'une structure de rampe selon le mode de réalisation de l'invention de la figure 1;
la figure 3 est vue en en perspective d'une partie d'un tronçon de rampe telle que représentée figures 1 et 2 ;
la figure 4 est une vue en coupe, à une échelle différente et selon un plan passant par deux points de fixation inférieurs, du tronçon représenté figure 3 ;
la figure 5 est une vue en coupe de la partie supérieure du tronçon représenté figure 3, à une échelle différente et selon un plan passant par deux points de fixation supérieurs ;
la figure 6 est une vue en perspective similaire à celle de la figure 3 d'un tronçon de mât de structure de rampe, selon un autre mode de réalisation de l'invention ;
la figure 7 est une vue en coupe, à une échelle différente et selon un plan de coupe passant par un point de fixation supérieur, et,
la figure 8 est une vue similaire à celle de la figure 5, illustrant une variante de réalisation du tube longitudinal supérieur.

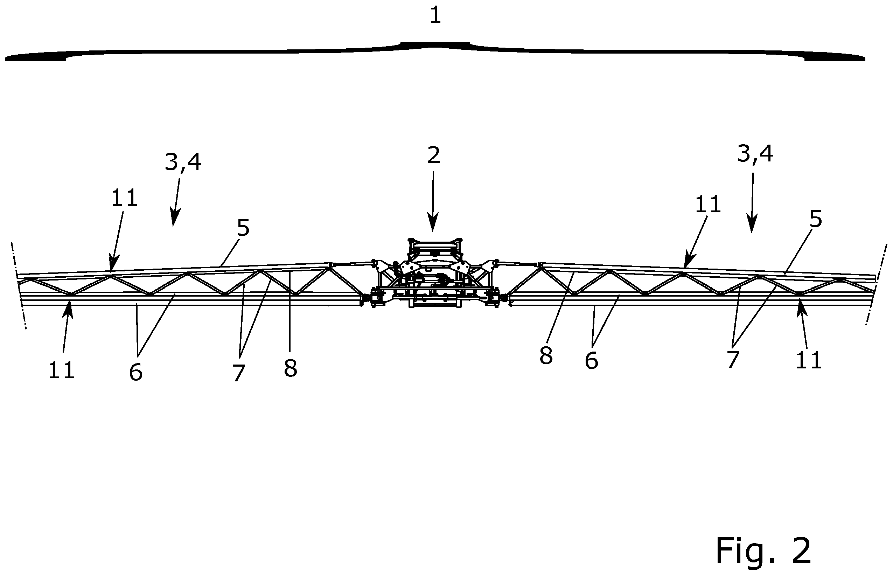

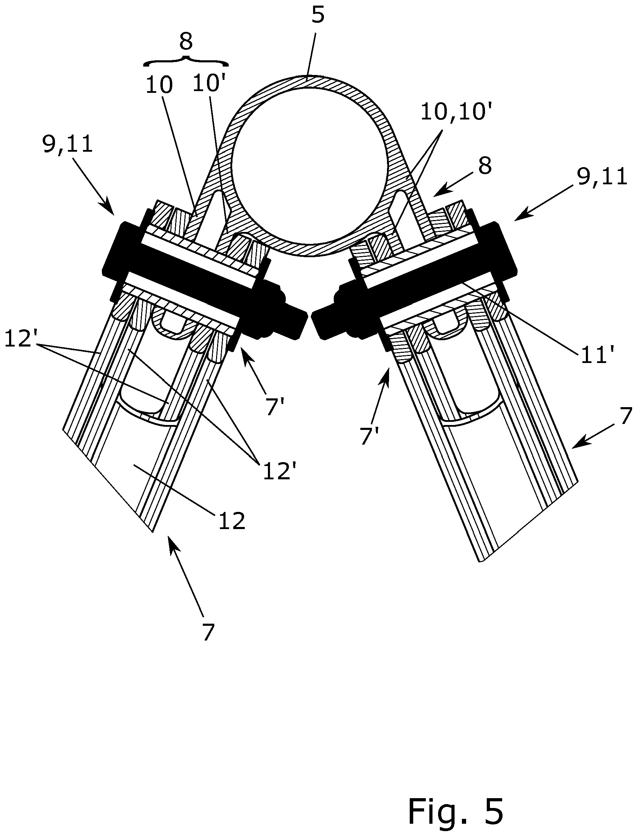

Les figures 2 à 8 des dessins annexés montrent, au moins en partie, une structure de rampe 1 de pulvérisation ou d'épandage comprenant deux mâts latéraux 3, 3' formés chacun d'au moins un tronçon 4, ces deux mâts latéraux 3, 3' étant avantageusement disposés de part et d'autre d'un segment central 2.

Le tronçon 4 unique, chaque tronçon 4 ou au moins un des tronçons 4 de chaque mât latéral 3, 3' est constitué d'un assemblage d'éléments allongés 5, 6, 7 comprenant, d'une part, un tube longitudinal sommital 5, d'autre part, au moins un tube longitudinal inférieur 6 et, enfin, des éléments d'entretoisement 7, formant tirants et étrésillons, s'étendant entre le tube sommital 5 et ledit au moins un tube inférieur 6, en les reliant.

Les notions « sommital » et « inférieur » sont à considérer lorsque la rampe 2 est déployée, en situation d'utilisation normale.

Conformément à l'invention, chaque tube longitudinal 5, 6 présente au moins une excroissance 8 radiale, profilée dans la direction longitudinale du tube 5, 6 considéré, et comportant au moins une ouverture 9, préférentiellement plusieurs ouvertures 9 espacées le long dudit tube 5, 6, constituant (le cas échéant chacune) un site de solidarisation pour une extrémité 7' d'au moins un élément d'entretoisement 7.

Grâce à l'invention, il est possible d'aboutir aux avantages évoqués en relation avec l'invention de la demande de brevet antérieure précitée de la demanderesse, voire à de meilleures performances, en termes de résistance à la flexion, de rigidité et de réduction des jeux, ce tout en limitant davantage le nombre de parties et de pièces constitutives.

En effet, la ou chaque excroissance radiale 8, formée d'un seul tenant avec le tube 5, 6 considéré, intègre les sites de solidarisation pour les éléments d'entretoisement 7 et contribue simultanément à la rigidification du tube 5, 6 visé.

En outre, les ouvertures 9 formant sites pourront être aménagées de manière précise dès la fabrication du tube 5, 6.

Afin d'aboutir à une construction légère et facilitant une solidarisation par accrochage au niveau des ouvertures 9, l'excroissance ou chaque excroissance 8 profilée est avantageusement creuse et présente avantageusement deux portions de parois planes opposées 10, 10' dans chacune desquelles sont ménagées des perforations 9' formant par coopération des ouvertures 9.

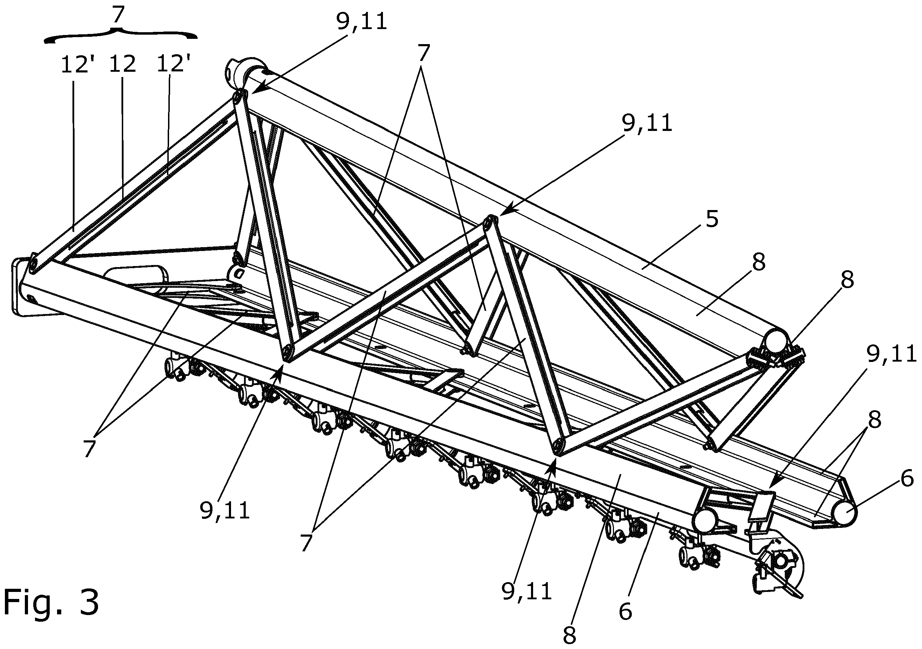

Préférentiellement, et comme le montrent les figures 3 à 5, 7 et 8, il peut être prévu que la ou chaque excroissance profilée 8 consiste en une projection en forme d'aile creuse réalisée d'un seul tenant avec le tube concerné 5, 6, s'étendant au moins sur toute la longueur de ce dernier et présentant deux parois latérales 10 et 10' en regard comportant des perforations 9' coïncidentes deux par deux et formant par coopération des ouvertures 9 traversant l'excroissance 8 concernée (perpendiculairement au plan médian de l'aide plane formant l'excroissance 8).

La rigidité des tubes 5, 6 sera ainsi augmentée dans le plan des éléments d'entretoisement 7.

Les perforations 9' sont, de manière privilégiée, réalisées par usinage perforant de chaque côté de l'excroissance 8 concernée, autorisant un montage facilité et un jeu de fonctionnement et d'assemblage maîtrisés.

En accord avec une caractéristique très avantageuse de l'invention, chaque ouverture 9 constitue un site de solidarisation du type palier de liaison pivot 11 reliant une extrémité 7' d'au moins un élément d'entretoisement 7 à l'excroissance profilée 8 concernée.

Un tel type de liaison constitue une solution idéale pour l'assemblage considéré, à savoir un bon compromis entre la rigidité totale d'une soudure (entraînant un risque de rupture par fatigue) et la rigidité limitée d'une liaison à rotule (faible rigidité en torsion du tronçon).

Selon une variante constructive optimisée, ressortant des figures 2, 3 et 6, chacun des éléments d'entretoisement 7 reliant le tube sommital 5 avec le ou un des tube(s) inférieur(s) 6 est aboutant, par une de ses extrémités 7', avec un élément 7 précédent et, par son autre extrémité 7', avec un élément 7 suivant. De plus, ces éléments d'entretoisement aboutants 7 sont tous situés dans un même plan et arrangés avec des inclinaisons successives opposées, deux éléments d'entretoisement 7 successifs étant solidarisés entre eux et solidarisés avec le tube concerné 5, 6 par une même liaison pivot 11 intégrant, en tant que palier, une ouverture 9 ménagée dans l'excroissance 8 concernée du tube 5, 6 considéré.

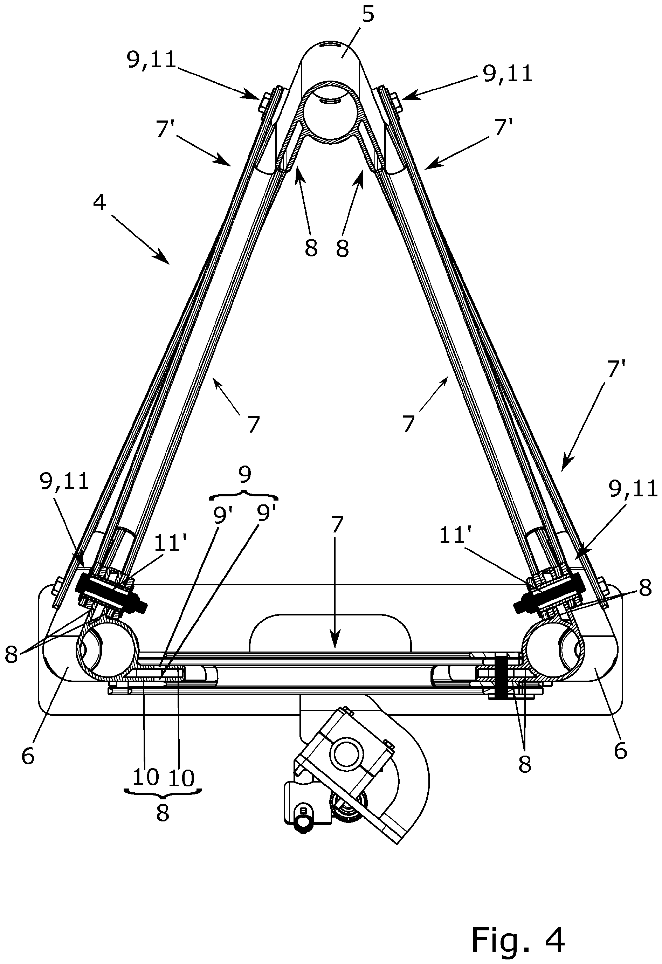

A titre d'exemple de réalisation pratique avantageuse, chaque liaison pivot 11 de solidarisation peut consister en un assemblage par vis/écrou (cf. figures 4, 5, 7 et 8). Une telle réalisation est non seulement robuste, simple et peu coûteuse, elle permet également de désolidariser et de démonter un des deux tirants ou étrésillons 7 d'un point de fixation 11, tout en conservant la solidarisation de l'autre.

A titre d'exemple alternatif de réalisation, la liaison pivot 11 de solidarisation peut aussi consister en un assemblage avec une goupille élastique à double montage ou un moyen analogue limitant ou rattrapant le jeu dans la liaison précitée.

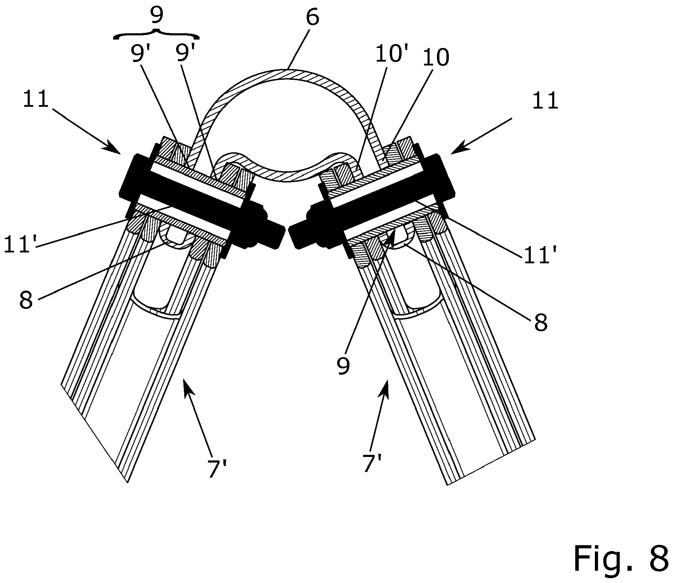

Comme le montre la figure 8, chacun ou au moins l'un des tubes 5, 6 peut présenter en section une structure non compartimentée et présenter une paroi unique formant enveloppe et définissant le corps du tube et la ou les excroissance(s) radiale(s), sans limite marquée entre ces différentes parties.

Toutefois, selon une réalisation préférée, chacun des tubes 5, 6 présente une section de base circulaire, sur laquelle est formée la ou chaque excroissance 8, le tube 5, 6 concerné étant préférentiellement compartimenté en section.

Un corps de tube de forme circulaire fournit notamment une bonne résistance aux sollicitations en torsion.

Afin d'alléger la structure de rampe 1 sans toutefois compromettre sa rigidité, il peut être prévu que chaque élément d'entretoisement 7 présente une section transversale en forme de H, dont l'âme 12 est plus courte longitudinalement, et préférentiellement moins épaisse, que ses ailes latérales 12', l'âme 12 étant absente au niveau des deux extrémités opposées 7' de l'élément d'entretoisement 7 considéré, lesquelles sont percées pour la réception d'un axe 11' de liaison pivot 11 coopérant avec une ouverture 9 formant site de solidarisation.

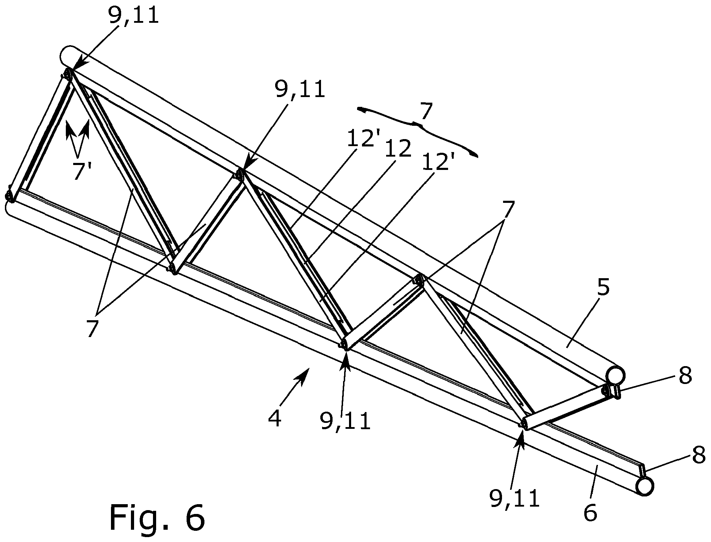

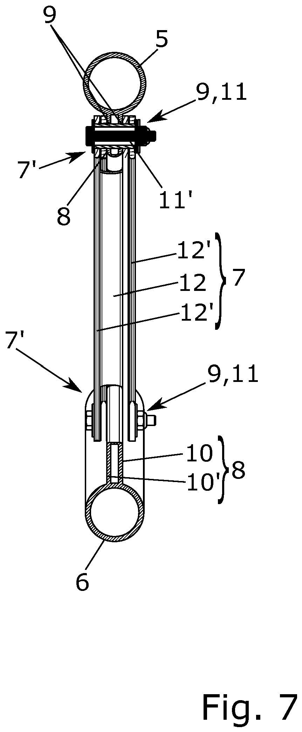

En accord avec un premier mode de réalisation, ressortant des figures 6 et 7, le ou chaque tronçon 4 ne comporte qu'un seul tube inférieur 6, les tubes sommital 5 et inférieur 6 ne comportent chacun qu'une seule excroissance profilée 8 et ledit tronçon 4 présente une structure globale plane, l'écartement entre les deux tubes 5, 6 diminuant d'une extrémité à l'autre dudit tronçon 4.

Une réduction de dimension progressive du tronçon 4 selon sa direction longitudinale permet d'aboutir à une structure de rampe globalement plus légère, avec un moment fléchissant propre plus réduit et décroissant rapidement vers l'extrémité libre des mâts 3, 3' latéraux, et avec des sollicitations moins importantes au niveau de l'interface d'accrochage desdits mâts 3, 3' avec le segment central 2.

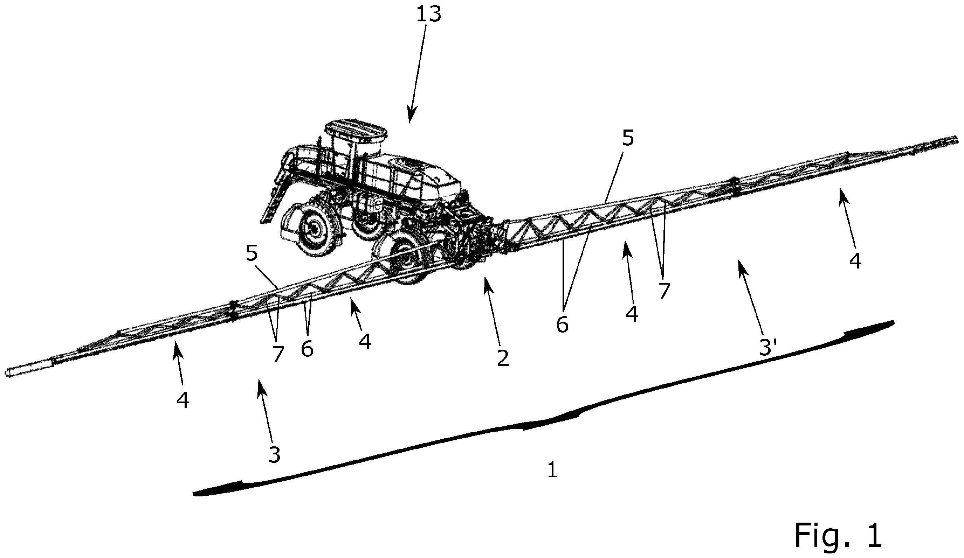

En accord avec un second mode de réalisation, ressortant des figures 1 à 5 et 8, le ou chaque tronçon 4 comporte deux tubes inférieurs 6 arrangés avec le tube sommital 5 selon une configuration triangulaire. De plus, chacun des tubes sommital 5 et inférieur 6 présente deux excroissances profilées 8, décalées angulairement autour de l'axe longitudinal du tube 5, 6 concerné, et le prisme triangulaire constitué par ledit tronçon 4 présente une section transversale décroissante d'une extrémité à l'autre dudit tronçon 4.

Dans cette variante, les trois faces du prisme triangulaire, à savoir la face inférieure et les deux flancs latéraux, sont formées d'éléments d'entretoisement 7. Les pulvérisateurs peuvent par exemple être accrochés aux éléments 7 de la face inférieure du tronçon 4.

Dans cette variante constructive, au moins les deux tubes inférieurs 6 (section isocèle), voire même les trois tubes 5 et 6 (section équilatérale), peuvent être identiques.

De manière préférée, la section transversale du tronçon 4 a une forme triangulaire isocèle, la largeur de la base et la hauteur de la section variant de manière similaire d'une extrémité à l'autre dudit tronçon 4. Dans cette variante, la base du prisme triangulaire formé par le tronçon 4 est située à proximité du sol à l'état déployé de la structure de rampe 1.

Dans les deux modes de réalisation précités, la réduction progressive de la section d'une extrémité à l'autre d'un tronçon 4 considéré se traduit aussi, pour des éléments d'entretoisement 7 identiques par une modification de leur inclinaison par rapport aux tubes 5 et 6 (réduction de l'angle 5/7 et 6/7 au niveau des liaisons pivots 11).

On comprend que chaque mât latéral 3, 3' peut comporter un, deux ou plusieurs tronçons 4, la plus petite section d'un tronçon 4 correspondant sensiblement à la plus grande section du tronçon 4 suivant en direction de l'extrémité libre du mât 3, 3' considéré (extrémité à l'opposé du segment central 2).

Comme le montre la figure 1 à titre d'exemple, chaque mât latéral 3, 3' peut comporter non seulement un ou plusieurs tronçons 4 à section décroissante, mais également un ou plusieurs tronçons à section constante (tubes 5 et 6 parallèles entre eux).

L'invention a également pour objet, comme le montre la figure 1, une machine 13 de pulvérisation ou d'épandage, du type tracté, porté ou automoteur, comprenant notamment au moins un réservoir, de moyens de mise en circulation de produit, un ou des circuits de distribution et une rampe sur laquelle sont montés les moyens d'éjection de produit, cette machine 13 étant caractérisée en ce que la rampe présente une structure de rampe 1 telle que décrite précédemment.

Bien entendu, l'invention n'est pas limitée aux modes de réalisation décrits et représentés aux dessins annexés. Des modifications sont possibles sans sortir du cadre de l'invention tel que défini par les revendications.

## Revendications

1. Structure de rampe (1) de pulvérisation ou d'épandage comprenant deux mâts latéraux (3, 3') formés chacun d'au moins un tronçon (4), ces deux mâts latéraux (3, 3') étant avantageusement disposés de part et d'autre d'un segment central (2),
le tronçon (4) unique, chaque tronçon (4) ou au moins un des tronçons (4) de chaque mât latéral (3, 3') étant constitué d'un assemblage d'éléments allongés (5, 6, 7) comprenant, d'une part, un tube longitudinal sommital (5), d'autre part, au moins un tube longitudinal inférieur (6) et, enfin, des éléments d'entretoisement (7), formant tirants et étrésillons, s'étendant entre le tube sommital (5) et ledit au moins un tube inférieur (6), en les reliant,
structure de rampe (1) **caractérisée en ce que** chaque tube longitudinal (5, 6) présente au moins une excroissance (8) radiale, profilée dans la direction longitudinale du tube (5, 6) considéré, et comportant au moins une ouverture (9), préférentiellement plusieurs ouvertures (9) espacées le long dudit tube (5, 6), constituant un site de solidarisation pour une extrémité (7') d'au moins un élément d'entretoisement (7).

2. Structure de rampe selon la revendication 1, **caractérisée en ce que** l'excroissance ou chaque excroissance (8) profilée est creuse et présente avantageusement deux portions de parois planes opposées (10, 10') dans chacune desquelles sont ménagées des perforations (9') formant par coopération des ouvertures (9).

3. Structure de rampe selon la revendication 1 ou 2, **caractérisée en ce que** la ou chaque excroissance profilée (8) consiste en une projection en forme d'aile creuse réalisée d'un seul tenant avec le tube concerné (5, 6), s'étendant au moins sur toute la longueur de ce dernier et présentant deux parois latérales (10 et 10') en regard comportant des perforations (9') coïncidentes deux par deux et formant par coopération des ouvertures (9) traversant l'excroissance (8) concernée.

4. Structure de rampe selon l'une quelconque des revendications 1 à 3, **caractérisée en ce que** chaque ouverture (9) constitue un site de solidarisation du type palier de liaison pivot (11) reliant une extrémité (7') d'au moins un élément d'entretoisement (7) à l'excroissance profilée (8) concernée.

5. Structure de rampe selon l'une quelconque des revendications 1 à 4, **caractérisée en ce que** chacun des éléments d'entretoisement (7) reliant le tube sommital (5) avec le ou un des tube(s) inférieur(s) (6) est aboutant, par une de ses extrémités (7'), avec un élément (7) précédent et, par son autre extrémité (7'), avec un élément (7) suivant, **en ce que** ces éléments d'entretoisement aboutants (7) sont tous situés dans un même plan et arrangés avec des inclinaisons successives opposées, deux éléments d'entretoisement (7) successifs étant solidarisés entre eux et solidarisés avec le tube concerné (5, 6) par une même liaison pivot (11) intégrant, en tant que palier, une ouverture (9) ménagée dans l'excroissance (8) concernée du tube (5, 6) considéré.

6. Structure de rampe selon l'une quelconque des revendications 1 à 5, **caractérisée en ce que** chacun des tubes (5, 6) présente une section de base circulaire, sur laquelle est formée la ou chaque excroissance (8), le tube (5, 6) concerné étant préférentiellement compartimenté en section.

7. Structure de rampe selon l'une quelconque des revendications 1 à 6, **caractérisée en ce que** chaque élément d'entretoisement (7) présente une section transversale en forme de H, dont l'âme (12) est plus courte longitudinalement, et préférentiellement moins épaisse, que ses ailes latérales (12'), l'âme (12) étant absente au niveau des deux extrémités opposées (7') de l'élément d'entretoisement (7) considéré, lesquelles sont percées pour la réception d'un axe (11') de liaison pivot (11) coopérant avec une ouverture (9) formant site de solidarisation.

8. Structure de rampe selon l'une quelconque des revendications 1 à 7, **caractérisée en ce que** le ou chaque tronçon (4) ne comporte qu'un seul tube inférieur (6), **en ce que** les tubes sommital et inférieur (5, 6) ne comportent chacun qu'une seule excroissance profilée (8) et **en ce que** ledit tronçon (4) présente une structure globale plane, l'écartement entre les deux tubes (5, 6) diminuant d'une extrémité à l'autre dudit tronçon (4).

9. Structure de rampe selon l'une quelconque des revendications 1 à 7, **caractérisée en ce que** le ou chaque tronçon (4) comporte deux tubes inférieurs (6) arrangés avec le tube sommital (5) selon une configuration triangulaire, **en ce que** chacun des tubes sommital (5) et inférieur (6) présente deux excroissances profilées (8), décalées angulairement autour de l'axe longitudinal du tube (5, 6) concerné, et **en ce que** le prisme triangulaire constitué par ledit tronçon (4) présente une section transversale décroissante d'une extrémité à l'autre dudit tronçon (4).

10. Structure de rampe selon la revendication 9, **caractérisée en ce que** la section transversale du tronçon (4) a une forme triangulaire isocèle, la largeur de la base et la hauteur de la section variant de manière similaire d'une extrémité à l'autre dudit tronçon (4).

11. Machine (13) de pulvérisation ou d'épandage, du type tracté, porté ou automoteur, comprenant notamment au moins un réservoir, de moyens de mise en circulation de produit, un ou des circuits de distribution et une rampe sur laquelle sont montés les moyens d'éjection de produit, machine (13) **caractérisée en ce que** la rampe présente une structure de rampe (1) selon l'une quelconque des revendications 1 à 10.

## Patentansprüche

1. Struktur für ein Sprüharm (1) oder ein Verteilerarm, umfassend zwei Seitenausleger (3, 3'), die jeweils aus mindestens einem Abschnitt (4) gebildet sind, wobei die beiden Seitenausleger (3, 3') vorteilhaft auf beiden Seiten eines Mittelsegments (2) angeordnet sind;
wobei der einzelne Abschnitt (4), jeder Abschnitts (4) oder mindestens einer der Abschnitte (4) jedes Seitenauslegers (3, 3') aus einer Baugruppe länglicher Elemente (5, 6, 7) gebildet ist, die einerseits ein Längsscheitelrohr (5) und andererseits mindestens ein unteres Längsrohr (6) umfasst, und ferner die Versteifungsemente (7), welche Zugstangen und Streben bilden, zwischen dem Längsscheitelrohr (5) und dem zumindest einen unteren Rohr (6) verlaufen und diese verbinden, wobei die Gestängestruktur (1) **dadurch gekennzeichnet** ist, das jedes Längsrohr (5, 6) mindestens einen Radialvorsprung (8), der in Längsrichtung des betreffenden Rohrs (5, 6) profiliert ist, sowie mindestens eine Öffnung (9), bevorzugt mehrere Öffnungen (9), die entlang des Rohrs (5, 6) beabstandet sind, aufweist, die eine Befestigungsstelle für ein Ende (7) von zumindest einem Versteifungselement (7) bilden.

2. Armstruktur nach Anspruch 1, **dadurch gekennzeichnet, dass** der Vorsprung oder jeder profilierte Vorsprung (8) hohl ist und vorteilhaft zwei ebene, gegenüberliegende Wandungsabschnitte (10, 10') aufweist, in die jeweils Durchbrüche (9') eingebracht sind, die in Zusammenwirkung Öffnungen (9) ausbilden.

3. Armstruktur nach einem der Ansprüche 1 oder 2, **dadurch gekennzeichnet, dass** der oder jeder profilierte Vorsprung (8) aus einem Vorsprung in Form eines Hohlflügels besteht, der einstückig mit dem entsprechenden Rohr (5, 6) gebildet ist, und sich zumindest über die ganze Länge des letzteren erstreckt und zwei einander zugewandte Seitenwandungen (10 und 10') aufweist, die Durchbrüche (9') aufweisen, die jeweils paarweise deckungsgleich sind und zusammenwirkend Öffnungen (9) bilden, die den jeweilen Vorsprung (8) durchqueren.

4. Armstruktur nach einem der Ansprüche 1 bis 3, **dadurch gekennzeichnet, dass** jede Öffnung (9) eine Befestigungsstelle vom Typ Gelenklager (11) darstellt, die ein Ende (7') des mindestens einen Versteifungselements (7) mit dem entsprechenden profilierten Vorsprung (8) verbindet.

5. Armstruktur nach einem der Ansprüche 1 bis 4, **dadurch gekennzeichnet, dass** jedes der Versteifungselemente (7), die das Längsrohr (5) mit dem/den unteren Rohr(en) (6) verbinden, mit einem seiner Enden (7') an ein vorausgehendes Element (7) angefügt ist, und, mit seinem anderen Ende (7') an ein nachfolgendes Element (7) angefügt ist, und dass diese angefügten Versteifungselemente (7) alle in einer selben Ebene liegen und mit den aufeinanderfolgenden Schrägen gegenüberliegend angeordnet sind, wobei zwei aufeinanderfolgende Versteifungselemente (7) miteinander fest verbunden und mit dem entsprechenden Rohr (5, 6) durch ein gleiches Gelenk (11) fest verbunden sind, in das als Lager eine Öffnung (9) integriert ist, die in den betreffenden Vorsprung (8) des entsprechenden Rohrs (5, 6) eingebracht ist.

6. Armstruktur nach einem der Ansprüche 1 bis 5, **dadurch gekennzeichnet, dass** jedes der Rohre (5, 6) einen kreisförmigen Basisabschnitt aufweist, an dem der oder jeder Vorsprung (8) gebildet ist, wobei das entsprechende Rohr (5, 6) im Schnitt bevorzugt unterteilt ist.

7. Armstruktur nach einem der Ansprüche 1 bis 6, **dadurch gekennzeichnet, dass** jedes Versteifungselement (7) einen H-förmigen Querschnitt aufweist, dessen Steg (12) längsweise kürzer, und bevorzugt weniger dick ist als seine Seitenflügel (12'), wobei der Steg (12) auf Höhe der zwei gegenüberliegenden Enden (7') des entsprechenden Versteifungselements (7) nicht vorhanden ist, wobei die Enden zur Aufnahme einer Achse (11') des Gelenks (11), das mit einer Öffnung (9) zusammenwirkt, die eine Befestigungsstelle bildet, durchbrochen sind.

8. Armstruktur nach einem der Ansprüche 1 bis 7, **dadurch gekennzeichnet, dass** der oder jeder Abschnitt (4) nur ein einziges unteres Rohr (6) aufweist, dass die Längs- und unteren Rohre (5, 6) jeweils nur einen einzigen profilierten Vorsprung (8) aufweisen, und dass der Abschnitt (4) eine insgesamt ebene Struktur aufweist, wobei der Abstand zwischen den zwei Rohren (5, 6) von einem Ende zum anderen Ende des Abschnitts (4) abnimmt.

9. Armstruktur nach einem der Ansprüche 1 bis 7, **dadurch gekennzeichnet, dass** der oder jeder Abschnitt (4) zwei untere Rohre (6) aufweist, die mit dem Längsrohr (5) gemäß einer dreieckigen Ausgestaltung angeordnet sind, dass jedes der Längsrohre (5) und unteren Rohre (6) zwei profilierte Vorsprünge (8) aufweist, die winklig um die Längsachse des entsprechenden Rohres (5, 6) versetzt sind, und dass das Dreieckprisma, das durch besagten Abschnitt (4) gebildet wird, einen Querschnitt aufweist, der von einem Ende zum anderen Ende des Abschnitts (4) abnimmt.

10. Armstruktur nach Anspruch 9, **dadurch gekennzeichnet, dass** der Querschnitt des Abschnitts (4) eine Form eines gleichschenkligen Dreiecks aufweist, wobei die Breite der Grundseite und die Höhe des Querschnitts auf ähnliche Weise von einem Ende zum anderen Ende des Rohrabschnitts (4) variieren.

11. Sprüh- oder Verteilermaschine (13) des Typs gezogen, getragen oder selbstfahrend, insbesondere aufweisend mindestens einen Behälter, Mittel zum Ausbringen des Produkts, einen oder mehrere Verteilerkreis(e), und ein Arm, an dem die Produkt-Ausspritzmittel montiert sind, wobei die Maschine (13) **dadurch gekennzeichnet ist, dass** der Arm eine Armstruktur (1) nach einem der Ansprüche 1 bis 10 aufweist.

## Claims

1. Boom structure (1) for spraying or spreading, comprising two lateral struts (3, 3') each formed of at least one segment (4), these two lateral struts (3, 3') being advantageously disposed on either side of a central segment (2),
the single segment (4), each segment (4) or at least one of the segments (4) of each lateral strut (3, 3') consisting of an assembly of elongate elements (5, 6, 7) comprising, on the one hand, a top longitudinal tube (5), on the other hand, at least one lower longitudinal tube (6) and, lastly, bracing elements (7), forming tie rods and braces, extending between the top tube (5) and said at least one lower tube (6), connecting them,
the boom structure (1) being **characterised in that** each longitudinal tube (5, 6) has at least one radial protrusion (8), profiled in the longitudinal direction of the tube (5, 6) in question, and comprising at least one opening (9), preferably a plurality of openings (9) spaced apart along said tube (5, 6), constituting a fixing location for one end (7') of at least one bracing element (7).

2. Boom structure according to claim 1, **characterised in that** the protrusion or each profiled protrusion (8) is hollow and advantageously has two opposed planar wall portions (10, 10') in each of which are formed perforations (9') forming openings (9) by cooperation.

3. Boom structure according to claim 1 or 2, **characterised in that** the or each profiled protrusion (8) consists of a hollow wing-shaped projection formed in one piece with the tube concerned (5, 6), extending at least over the whole length of the latter and having two facing side walls (10 and 10') comprising perforations (9') which coincide in twos and form, by cooperation, openings (9) which traverse the protrusion (8) concerned.

4. Boom structure according to any one of claims 1 to 3, **characterised in that** each opening (9) constitutes a fixing location of the pivot link bearing type (11) connecting one end (7') of at least one bracing element (7) to the profiled protrusion (8) concerned.

5. Boom structure according to any one of claims 1 to 4, **characterised in that** each of the bracing elements (7) connecting the top tube (5) to the lower tube or one of the lower tubes (6) abuts, by one of its ends (7'), with a preceding element (7) and, by its other end (7'), with a following element (7), **in that** these abutting bracing elements (7) are all situated in the same plane and arranged with opposed successive inclinations, two successive bracing elements (7) being fixed to each other and fixed to the tube concerned (5, 6) by the same pivot link (11) which integrates, as a bearing, an opening (9) formed in the protrusion (8) concerned of the tube (5, 6) under consideration.

6. Boom structure according to any one of claims 1 to 5, **characterised in that** each of the tubes (5, 6) has a circular base section, on which is formed the or each protrusion (8), the tube (5, 6) concerned being preferably compartmented in section.

7. Boom structure according to any one of claims 1 to 6, **characterised in that** each bracing element (7) has an H-shaped cross-section, of which the core (12) is shorter longitudinally, and preferably less thick, than its lateral wings (12'), the core (12) being absent at the level of the two opposed ends (7') of the bracing element (7) under consideration, which ends have holes for receiving a shaft (11') of a pivot link (11) cooperating with an opening (9) forming the fixing location.

8. Boom structure according to any one of claims 1 to 7, **characterised in that** the or each segment (4) comprises only one lower tube (6), **in that** the top and lower tubes (5, 6) each comprise only one profiled protrusion (8) and **in that** said segment (4) has a planar overall structure, the distance between the two tubes (5, 6) decreasing from one end to the other of said segment (4).

9. Boom structure according to any one of claims 1 to 7, **characterised in that** the or each segment (4) comprises two lower tubes (6) arranged with the top tube (5) in a triangular configuration, **in that** each of the top (5) and lower (6) tubes has two profiled protrusions (8), offset angularly about the longitudinal axis of the tube (5, 6) concerned, and **in that** the triangular prism constituted by said segment (4) has a cross-section decreasing from one end to the other of said segment (4).

10. Boom structure according to claim 9, **characterised in that** the cross-section of the segment (4) has a shape of an isosceles triangle, the width of the base and the height of the section varying similarly from one end to the other of said segment (4).

11. Spraying or spreading machine (13), of the towed, mounted or self-propelled type, comprising in particular at least one reservoir, product circulating means, one or more distribution circuits and a boom on which are mounted the product ejection means, the machine (13) being **characterised in that** the boom has a boom structure (1) according to any one of claims 1 to 10.
